# DEMANDE DE BREVET EUROPEEN

(11) **EP 4 159 386 A1**
(43) Date de publication de la demande: **05.04.2023**
(21) Numéro de dépôt: 22198849.6
(22) Date de dépôt: 29.09.2022
(51) Int. Cl.: B25J 9/16, G05B 19/4097

(54) **PROCÉDÉ DE PEINTURE D'UNE PIÈCE COMPRENANT LA GÉNÉRATION D'UNE TRAJECTOIRE ADAPTÉE À LA PIÈCE RÉELLE**

(30) Priorité: 30.09.2021 FR 2110365
(71) Demandeur: Exel Industries, 51200 Epernay (FR)
(72) Inventeur: CHEVRON, Didier, 38430 MOIRANS (FR); CHOUAN, Nicolas, 38580 Allevard-les-bains (FR); PALACIO, Juan, 38000 GRENOBLE (FR)
(74) Mandataire: Lavoix

(57) **Abrégé**

L'invention concerne un procédé (1) de peinture d'une pièce (2) au moyen d'un robot de peinture (3) comprenant un bras robotisé (4) équipé d'un dispositif de projection de peinture (5), le procédé (1) comprenant, une étape S1 de modélisation d'un modèle 3D réaliste (3Dr) correspondant à la pièce (2) telle que déformée et positionnée dans une cellule de peinture, le modèle 3D réaliste (3Dr) comprenant des informations de trajectoire de peinture adaptées à la pièce telle que déformée et positionnée dans la cellule de peinture, et une étape de projection de peinture S2 pendant laquelle le dispositif de projection de peinture (5) est déplacé le long de la trajectoire de peinture en regard de la pièce (2).

## Description

### DOMAINE TECHNIQUE DE L'INVENTION

L'invention concerne le domaine technique général des procédés de peinture automatisés, notamment au moyens de robots de peinture, et plus particulièrement les robots de peinture équipés d'une tête d'impression de peinture.

### ARRIERE-PLAN TECHNOLOGIQUE DE L'INVENTION

Il est connu que les robots de pulvérisation comprennent classiquement un bras articulé robotisé et un pulvérisateur monté sur ce bras, agencé pour être déplacé en regard d'une pièce à peindre ou à traiter. Certains robots de peinture sont proposés avec des têtes d'impression, montées à l'extrémité d'un bras robotisé, qui sont utilisées pour imprimer en peinture des motifs, ou des zones contrastées, sur des pièces, de manière automatisée et sans « overspray », c'est-à-dire sans que des gouttelettes provenant d'un nuage de peinture pulvérisé par un pulvérisateur de peinture ne viennent se déposer hors de la zone du motif à peindre. Il est ainsi possible de peindre le motif ou la zone de contraste sans besoin de préparation du support au préalable, classiquement à l'aide de masques autocollants. Ces têtes d'impression comportent généralement une pluralité de buses disposées de manière à former une bande de peinture lorsque la tête d'impression est déplacée en regard de la surface à peindre.

Afin d'imprimer un motif sur une pièce à décorer, ou peindre, par exemple une carrosserie, il est connu de générer une trajectoire à partir du fichier CAO (Conception Assistée par Ordinateur, modèle 3D de la pièce) de la pièce à revêtir. Une trajectoire de référence du robot et de chaque buse de la tête d'impression est définie par rapport au modèle CAO de la pièce et par rapport au positionnement de ce modèle CAO de la pièce dans un modèle 3D de la cellule de revêtement, c'est-à-dire la zone de la ligne de production dans laquelle l'étape d'impression du motif est réalisée. La trajectoire définit les points de passage de la tête d'impression par rapport à la pièce, et comporte également des instructions d'activation pour chacune des buses de la tête d'impression. La trajectoire est définie pour déplacer la tête d'impression en regard de la zone à peindre pour imprimer le motif désiré sur la zone à peindre.

Classiquement, les trajectoires comportent une pluralité de lignes parallèles le long desquelles la tête d'impression est déplacée, et l'activation des buses lors de ce déplacement mène au dépôt d'une bande de peinture. L'écart entre les lignes parallèles est configuré pour à la fois limiter le chevauchement excessif des bandes de peinture, de manière à limiter l'utilisation de peinture, et éviter impérativement qu'il n'y ait d'écart entre les bandes, ce qui laisserait une zone non recouverte sur le motif.

Le modèle CAO de la pièce est donc associé à des trajectoires d'impression spécifiquement définies en fonction de la géométrie de la pièce et des zones à traiter.

Dans la réalité, la pièce fabriquée présente des écarts dimensionnels par rapport au modèle CAO. Ces écarts peuvent être importants vis à vis de la précision nécessaire pour l'impression, pouvant par exemple atteindre un ordre de grandeur de plusieurs millimètres d'écart sur une pièce étendue, par exemple un capot ou un pavillon d'automobile. En outre, il peut exister un écart entre la position réelle de la pièce dans la cellule de revêtement et la position théorique du modèle CAO de la pièce dans le modèle 3D de la cellule.

En plus de dégrader la qualité perçue du motif imprimé, ces écarts peuvent entrainer un mauvais positionnement des motifs par rapport aux références définies sur la pièce pour positionner le motif, par exemple des lignes de style qui doivent coïncider avec un bord de la surface à peindre. Cela peut également générer des risques de collision entre le bras robotisé et la pièce à peindre, pouvant entraîner une destruction de la pièce et endommager le robot. En effet, pour permettre d'éviter l'overspray, les têtes d'impression sont conçues pour être déplacées à très courte distance des pièces à peindre. Si la pièce arrive en cellule de peinture mal positionnée à cause d'un dysfonctionnement de la ligne de production, il y a donc un risque de collision entre la pièce et le robot. Il faut donc pouvoir s'adapter à la géométrie de la pièce et à son positionnement dans l'espace.

Un document WO2020/225350 propose une solution consistant à enregistrer localement tous les écarts par mesure directe sur le composant à peindre en effectuant une étape de mesure avec le robot de peinture. Lors de l'étape de mesure, le même mouvement du robot doit nominalement être effectué que pour l'application de peinture soit effectuée de façon précise. Cela implique que le comportement du robot et l'influence de toutes les erreurs lors de la mesure et de l'application sont identiques. La cause exacte d'une erreur de positionnement, par exemple les écarts dans la position du composant, la forme du composant ou les erreurs de positionnement liées à la température du robot ou du composant, ne sont pas pertinents, car la valeur mesurée pour chaque point de mesure reflète la somme de toutes les erreurs au point respectif. Un tel procédé implique cependant de devoir calculer une nouvelle trajectoire de peinture pour chaque pièce mesurée. En outre, le procédé de mesure consomme du temps et de l'énergie. De plus, les résultats de chaque opération de mesure ne sont pas réutilisables car uniquement associés à la pièce concernée. Un tel procédé ne protège pas non plus d'un risque de collision entre la pièce et le robot. En effet, la trajectoire de l'étape de mesure étant identique à la trajectoire de l'étape de peinture, le robot peut entrer en collision avec la pièce si celle-ci est mal positionnée.

Il existe donc un besoin pour proposer une adaptation de trajectoires de traitement adaptées à des pièces réelles, qui permette d'éviter tout risque de collision entre la pièce et le robot et qui soit économe en énergie.

### RESUME DE L'INVENTION

On constate qu'il existe un besoin pour une adaptation de trajectoires de traitement adaptées à des pièces réelles, qui permette d'éviter tout risque de collision entre la pièce et le robot et qui soit économe en énergie.

Selon un premier aspect de l'invention, on tend à satisfaire ce besoin en proposant un procédé de peinture d'une pièce au moyen d'un robot de peinture comprenant un bras robotisé équipé d'un dispositif de projection de peinture, le procédé comprenant, une étape primaire S1 de modélisation d'un modèle 3D réaliste comprenant des informations de trajectoire de peinture, et une étape primaire de projection de peinture S2 pendant laquelle le dispositif de projection de peinture est déplacé le long de la trajectoire de peinture en regard de la pièce, l'étape primaire S1 comprenant des étapes secondaires de :
- S10 : Détermination des coordonnées de référence d'au moins trois points caractéristiques modèle sur un modèle 3D nominal de la pièce à peindre, les coordonnées des points caractéristiques modèle étant exprimées dans un repère de référence ;
- S20 : Détection d'au moins trois points caractéristiques réels sur la pièce, les points caractéristiques réels correspondant respectivement sur la pièce à un des points caractéristiques modèle déterminés sur le modèle 3D nominal au cours de l'étape S10 ;
- S30 : Transposition des coordonnées des points caractéristiques réels et des coordonnées des points caractéristiques modèle dans un repère commun, par exemple le repère de référence ;
- S40 : Génération d'un modèle 3D réaliste correspondant à la pièce telle que déformée et positionnée dans une cellule de peinture, en appliquant au modèle 3D nominal des simulations de contraintes entraînant des déformations de manière à déplacer les points caractéristiques modèle vers les coordonnées respectives de leur point caractéristique réel correspondant, de sorte à faire correspondre la position des points caractéristiques modèle par rapport au modèle 3D nominal avec la position des points caractéristiques réels par rapport au modèle 3D réaliste.

Optionnellement mais avantageusement, le procédé comprend les caractéristiques suivantes, prises seules ou en combinaison :
l'étape S20 de détection de points caractéristiques réels sur la pièce comprend :
   - une sous-étape S21 d'acquisition d'une image de la pièce, et
   - une sous-étape S22 d'analyse d'image pour détecter les points caractéristiques réels de la pièce, les points caractéristiques réels (Pr) relevés étant les mêmes éléments visuels distinctifs de la pièce que les éléments visuels distinctifs du modèle 3D nominal qui sont considérés comme les points caractéristiques modèle, et
   - une sous étape S23 de mesure des coordonnées des points caractéristiques réels ;
la sous-étape S22 d'analyse d'image est avantageusement mise en œuvre au moyen d'un algorithme entraîné par procédé d'intelligence artificielle ;
au cours de la sous-étape S23 les points caractéristiques réels sont associés à des coordonnées dans repère de système de mesure, et dans lequel l'étape secondaire d'identification S30 comprend :
   - une sous-étape de transposition S31 au cours de laquelle les coordonnées des points caractéristiques réels exprimées dans le repère de système de mesure et les coordonnées des points caractéristiques modèle du modèle 3D nominal exprimées dans le repère de référence vont être exprimées dans un même repère commun, et
   - une sous-étape S32 de calcul d'un repère pièce configuré pour assigner à un point caractéristique réel des coordonnées dans le repère pièce sensiblement équivalentes aux coordonnées dans le repère de référence du point caractéristique modèle associé, cette sous-étape S32 de calcul permettant d'identifier la matrice de transformation du repère de référence vers le repère pièce ;
l'étape secondaire S40 de génération d'un modèle 3D réaliste comprend :
   - une sous-étape d'estimation d'écarts S41, au cours de laquelle sont comparés :
      - les coordonnées des points caractéristiques réels exprimées dans le repère pièce et
      - les coordonnées des points caractéristiques modèle exprimées dans le repère de référence, de manière à associer une pluralité de vecteurs de déplacement (Vd) entre chaque point caractéristique modèle et le point caractéristique réel correspondant, ce qui permet d'obtenir un champ de déplacement, et
   - une sous-étape de simulation de contraintes S42, réalisée suite à la sous-étape d'estimation d'écarts S41, en appliquant des déformations au modèle 3D de la pièce de manière à réduire au maximum les écarts de position entre les points caractéristiques du modèle 3D et ceux de la pièce, de manière à générer le modèle 3D réaliste correspondant à la pièce telle que déformée ;
l'étape primaire S1 de modélisation comprend en outre une étape secondaire S50 d'assignation d'une trajectoire assignée pour la tête d'impression, la trajectoire assignée étant sélectionnée pour correspondre au modèle 3D réaliste afin d'adapter les trajectoires de la tête d'impression aux déformations de la pièce ;
l'étape secondaire S50 d'assignation comprend une sous-étape de génération S51 de trajectoire configurée pour générer une trajectoire générée adaptée au modèle 3D réaliste ;
l'étape secondaire S50 d'assignation comprend en outre une sous-étape d'enregistrement S52 au cours de laquelle chaque trajectoire générée au cours de la sous-étape S51 de génération de trajectoire est ensuite enregistrée dans une base de données, associée avec le modèle 3D réaliste, et une sous-étape S53 de comparaison réalisée après l'étape de génération de modèle S40, configurée pour comparer le modèle 3D réaliste obtenu par l'exécution de l'étape S40 de génération de modèle avec les modèles 3D réalistes enregistrés dans la base de données, de sorte que si le modèle 3D réaliste obtenu suite à l'exécution de l'étape S40 de génération de modèle correspond sensiblement à une entrée dans la base de données, les trajectoires générées associées à cette entrée sont appliquées au modèle 3D réaliste lors de l'exécution de l'étape de peinture S2 de la pièce ;
la sous-étape S53 de comparaison est réalisée avant la sous-étape S51 de génération de trajectoire ;
l'étape secondaire S50 d'assignation comprend en outre une sous-étape S54 de certification est réalisée avant l'exécution de la sous-étape S52 d'enregistrement, au cours de laquelle la trajectoire générée calculée au cours de la sous-étape S51 de génération de trajectoire est contrôlée afin de vérifier que cette trajectoire générée ne comporte pas de collision entre le robot de peinture et la pièce ;
l'étape primaire S1 de modélisation comprend en outre une étape de contrôle qualité S60 configurée pour détecter un défaut sur une pièce ou une ligne de production, au cours de laquelle le champ de déplacement mesuré au cours de la sous-étape S41, est comparé avec des seuils de détection d'erreur, de manière à détecter un défaut sur la pièce, et/ou les composantes de la matrice de transformation obtenue grâce à la sous-étape S32 sont comparées à des seuils de détection d'erreur, de manière à détecter un défaut de positionnement de la pièce et donc un défaut sur la ligne de production.

Selon un autre aspect, l'invention concerne une unité de calcul comportant une mémoire et un processeur, la mémoire comprenant un programme configuré pour mettre en œuvre un procédé de peinture selon l'invention lorsqu'il est exécuté par le processeur.

Selon un autre aspect, l'invention concerne un produit programme d'ordinateur comportant des données de code configurées pour, lorsqu'elles sont exécutées par un processeur ou une unité de calcul, permettre la mise en œuvre d'un procédé selon l'invention.

Selon un autre aspect, l'invention concerne un robot de peinture comprenant un bras robotisé équipé d'un dispositif de projection de peinture comprenant une tête d'impression, un système d'acquisition comprenant un appareil optique et un système de mesure, le robot de peinture étant configuré pour être commandé au moyen d'une poste de contrôle comprenant une unité de calcul selon l'invention, de manière à mettre en œuvre un procédé selon l'invention.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :

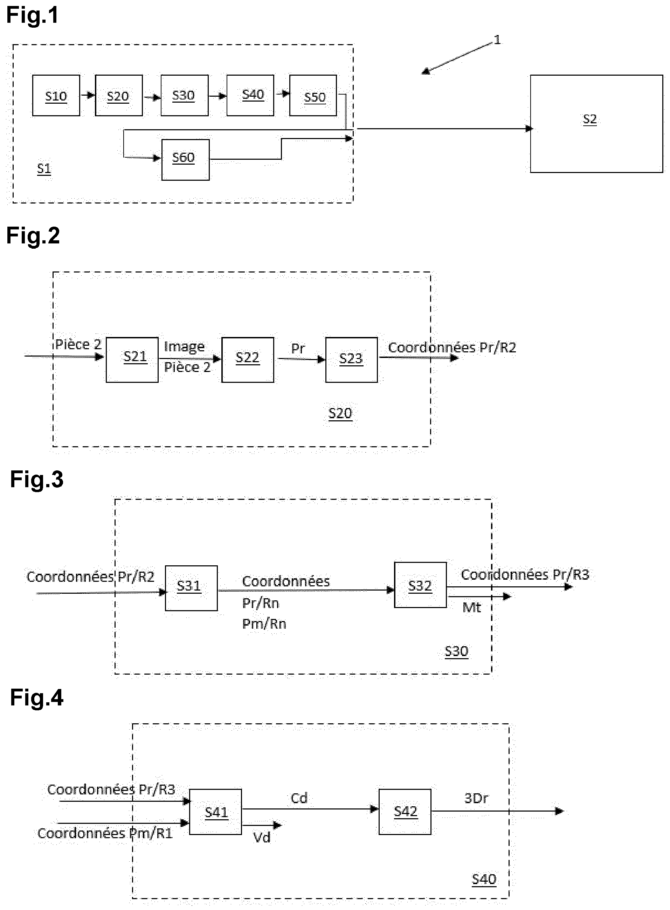

La figure 1 est une représentation schématique d'un procédé de peinture conforme à l'invention ;
La figure 2 est une représentation schématique détaillant l'étape S20 d'un procédé de peinture conforme à l'invention ;
La figure 3 est une représentation schématique détaillant l'étape S30 d'un procédé de peinture conforme à l'invention ;
La figure 4 est une représentation schématique détaillant l'étape S40 d'un procédé de peinture conforme à l'invention ;

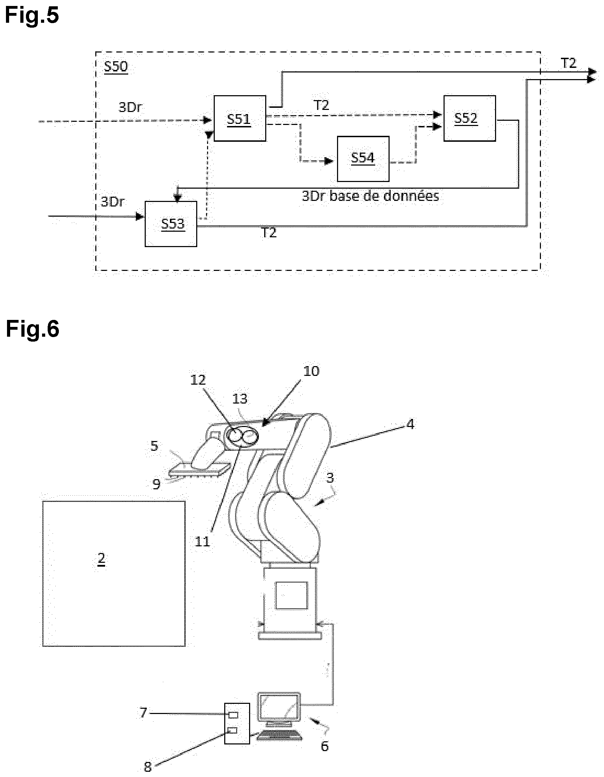

La figure 5 est une représentation schématique détaillant l'étape S50 d'un procédé de peinture conforme à l'invention ;
La figure 6 représente un robot de peinture conforme à un aspect de l'invention ;

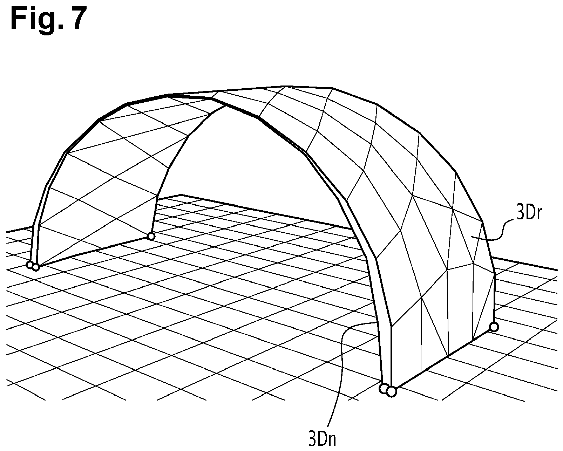

La figure 7 est une représentation schématique permettant d'illustrer un modèle 3D nominal et un modèle 3D réaliste obtenu au moyen d'un procédé conforme à l'invention.

### DESCRIPTION DETAILLEE

L'invention concerne un procédé 1 de peinture d'une pièce 2 au moyen d'un robot de peinture 3 comprenant un bras robotisé 4 équipé d'un dispositif de projection de peinture 5, le procédé 1 comprenant, antérieurement à une étape primaire de projection de peinture S2 en déplaçant le dispositif de projection de peinture 5 le long d'une trajectoire de peinture en regard d'une pièce à peindre, une étape primaire S1 de modélisation d'un modèle 3D réaliste 3Dr correspondant à une pièce 2 sur une chaîne de production, en cours de procédé industriel, en fonction d'un modèle 3D nominal 3Dn de la pièce et de mesures réalisées sur la pièce 2 sur la chaîne de production, préférentiellement lorsque la pièce est positionnée dans une cellule de peinture avant de réaliser l'étape de peinture.

Le dispositif de projection de peinture 5 comprend préférentiellement une tête d'impression, mais peut alternativement comprendre un pulvérisateur.

Il est entendu par modèle 3D nominal 3Dn le modèle de la pièce défini lors de la conception du produit, avec ses dimensions nominales. Il peut s'agir d'un modèle CAO, c'est-à-dire un fichier informatique modélisant la pièce.

Le modèle 3D nominal 3Dn de la pièce est modélisé et positionné dans un repère de référence R1 lié au modèle 3D nominal 3Dn, de sorte que les points du modèle 3D nominal 3Dn de la pièce ont tous des coordonnées de référence dans le repère de référence R1.

Le modèle 3D réaliste 3Dr est configuré pour représenter la pièce 2 dans l'atelier, et comporte donc les défauts géométriques et les défauts de positionnement de la pièce 2.

Une telle étape primaire S1 de modélisation d'un modèle 3D réaliste 3Dr comprend les étapes secondaires de :
- S10 : Détermination des coordonnées de référence Cr d'au moins trois points caractéristiques modèle Pm sur le modèle 3D nominal 3Dn de la pièce à peindre, les coordonnées de référence Cr de ces points caractéristiques modèle Pm étant exprimées dans le repère de référence R1 ;
- S20 : Détection d'au moins trois points caractéristiques réels Pr sur la pièce 2, les points caractéristiques réels Pr correspondant respectivement aux points caractéristiques déterminés au cours de l'étape S1 ;
- S30 : Identification de la position et l'orientation de la pièce (2) par rapport au robot de peinture (3);
- S40 : Génération d'un modèle 3D réaliste 3Dr, c'est-à-dire un modèle 3D de la pièce correspondant à la pièce 2 telle que déformée et positionnée sur la chaîne de production, en appliquant au modèle 3D nominal 3Dn des simulations de contraintes entraînant des déformations, par exemple de l'étirement, de la torsion, de la flexion, de manière à déplacer les points caractéristiques modèle Pm vers les coordonnées respectives de leur point caractéristique réel Pr correspondant, autrement dit de sorte à faire correspondre la position des points caractéristiques modèle Pm par rapport au modèle 3D nominal 3Dn avec la position des points caractéristiques réels Pr par rapport au modèle 3D réaliste 3Dr.

L'adjectif primaire utilisé pour qualifier les étapes S1 et S2 signifie que ces étapes sont d'un niveau supérieur aux étapes secondaires qu'elles incluent éventuellement, telles que les étapes S10 à S40. Cette relation s'applique également vis-à-vis des autres étapes secondaires mentionnées dans la suite de cette description. On peut également qualifier les étapes S1 et S2 d'étapes principales, alors que les étapes S10 à S40 et les autres étapes de même niveau mentionnées ci-après constituent des étapes unitaires de l'étape principale S1.

Un tel procédé est mis en œuvre par des moyens de calcul automatisés, au moyen d'un programme d'ordinateur comportant des données de code qui, lorsqu'elles sont exécutées par un processeur, permettent la mise en œuvre de l'étape primaire S1 de modélisation.

L'invention concerne donc également une unité de calcul 6 comportant une mémoire 7 et un processeur 8, la mémoire comprenant le programme configuré pour mettre en œuvre de l'étape primaire S1 de modélisation, le processeur 8 étant configuré pour mettre en œuvre le programme de manière à réaliser de l'étape primaire S1 de modélisation.

Le robot de peinture 3 peut être équipé de l'unité de calcul 6, ou alternativement l'unité de calcul 6 peut être déportée, par exemple intégrée à un poste de contrôle du robot de peinture 3, ou intégrée à un ordinateur distant.

Le modèle 3D réaliste 3Dr obtenu au moyen de de l'étape primaire S1 de modélisation peut ensuite être utilisé pour réaliser différents procédés.

Dans un procédé 1 de peinture, notamment un procédé d'impression d'un motif sur une pièce mis en œuvre au moyen du robot de peinture 3 équipé d'une tête d'impression de peinture 9 comprenant une pluralité de buses de projection de peinture commandables indépendamment les unes des autres, le modèle 3D réaliste 3Dr peut être utilisé pour calculer une nouvelle trajectoire de la tête d'impression 9, et de nouvelles commandes d'activation des buses qui définissent une trajectoire d'application.

Au cours de l'étape secondaire S10 de détermination, il est entendu par points caractéristiques modèle Pm des points du modèle 3D nominal 3Dn qui vont être utilisés pour représenter la position et la géométrie, ou la déformation, de la pièce 2. Ils sont choisis pour être aisément détectables au moyen de capteurs optiques et de procédés d'analyse d'image, et sont avantageusement positionnés sur des zones de la pièce pertinentes, en fonction de l'utilisation qui est faite du modèle 3D réaliste 3Dr de la pièce.

Le choix des points caractéristiques, notamment leur nombre et leur position sur la pièce dépend du but recherché : recalage du repère ou calcul de la déformation. Les points caractéristiques peuvent être des extrémités de la pièce, des coins de pièce, des milieux de segments, des lignes de style, des arêtes, des perçages, des sommets, ou tout point aisément détectable par reconnaissance d'image. Cela permet d'améliorer la précision de l'étape S20 de détection des points caractéristiques réels Pr sur la pièce 2.

Il est toutefois nécessaire de relever au moins trois points caractéristiques non alignés pour pouvoir déduire l'orientation de la pièce 2. Un nombre supérieur de points alourdit le calcul mais permet d'améliorer la précision de de l'étape primaire S1 de modélisation.

Dans une utilisation pour détecter un défaut de la pièce, dans un procédé de contrôle qualité, il est par exemple plus pertinent que certains points caractéristiques soient situés sur les zones les plus fragiles ou les moins rigides de la pièce, qui sont plus aptes à concentrer des défauts que des parties massives. Cela permet d'améliorer la fiabilité de la détection de défauts.

Dans une utilisation pour adapter une trajectoire de robot de peinture, il est plus pertinent de choisir certains points caractéristiques sur la zone à peindre, ce qui va permettre d'évaluer plus précisément les défauts de position et de géométrie de cette zone.

L'étape secondaire S20 de détection de points caractéristiques réels Pr sur la pièce 2 comprend une sous-étape S21 d'acquisition d'une image de la pièce 2, réalisée au moyen d'un dispositif d'acquisition 10, comprenant un appareil optique 11, par exemple un scanner 3D ou une caméra, associé ou non à un dispositif de projection 12 d'un motif lumineux par LED ou LASER.

De préférence, le dispositif d'acquisition d'image comprend un appareil optique 11 binoculaire et un dispositif de projection 12 d'un motif lumineux, ce qui permet de faciliter la détection de points particuliers, par exemple des reliefs.

Une deuxième sous-étape S22 d'analyse d'image est ensuite réalisée pour détecter les points caractéristiques réels Pr de la pièce. La sous-étape S22 d'analyse d'image est avantageusement mise en œuvre au moyen d'un algorithme entraîné par procédé d'intelligence artificielle. Ainsi, à chaque nouvelle étape secondaire S20 de détection réalisée, les images des points caractéristiques réels Pr détectés sont stockées dans une base de données permettant d'entraîner l'algorithme d'analyse d'image. Cela permet d'améliorer la robustesse de l'étape secondaire S20 de détection des points caractéristiques réels Pr, qui est capable de détecter les points caractéristiques réels Pr même dans des cas de déformations ou de défaut de positionnement qui n'ont pas étés rencontrés auparavant.

Les points caractéristiques réels Pr relevés sont les mêmes éléments visuels distinctifs de la pièce 2 que les éléments visuels distinctifs du modèle 3D nominal 3Dn qui sont considérés comme les points caractéristiques modèle Pm. Chaque point caractéristique réel Pr correspond donc à un point caractéristique modèle Pm.

Une sous-étape S23 de mesure des coordonnées des points caractéristiques réels Pr est ensuite réalisée au moyen du dispositif d'acquisition 10. Le dispositif d'acquisition 10 comprend un système de mesure 13, par exemple un scanner 3D, un système de mesure laser, ou un appareil optique, associé à un repère de système de mesure R2. Le système de mesure 13 associe les points caractéristiques réels Pr à des coordonnées dans le repère de système de mesure R2.

Le nom sous-étape utilisé pour qualifier les sous-étapes S22 à S23 signifie que ces sous-étapes sont d'un niveau inférieur à l'étape secondaire 20 à laquelle elles appartiennent. Ces sous étapes constituent en ce sens des étapes tertiaires, vis-à-vis des étapes primaires et secondaires. Cette relation s'applique également vis-à-vis des autres sous-étapes mentionnées dans la suite de cette description et des étapes secondaires auxquelles elles appartiennent.

L'étape secondaire d'identification S30 est ensuite réalisée, comprenant une sous-étape de transposition S31 au cours de laquelle les coordonnées des points caractéristiques réels Pr dans le repère de système de mesure R2 et les coordonnées des points caractéristiques modèle Pm du modèle 3D nominal 3Dn exprimées dans le repère de référence R1 vont être exprimées dans un même repère commun. Cela peut être le repère de référence R1 ou le repère de robot R0.

Au cours de la sous-étape S23 de mesure, le dispositif d'acquisition 10 mesure les coordonnées de points caractéristiques réels Pr de la pièce 2 et exprime ces coordonnées dans le repère de système de mesure R2.

Les coordonnées des points caractéristiques réels Pr sont transposées du repère de système de mesure R2 dans un repère de robot R0.

En effet, le contrôle/commande du robot de peinture 3 implique de connaître la position du robot de peinture 3 dans le repère de robot R0.

La position de chaque point du robot de peinture 3 est donc connue à tout moment dans le repère de robot R0. La position et l'orientation du système de mesure 13, monté sur le robot de peinture 3, est donc connue à tout moment dans le repère de robot R0.

Lors de la sous-étape S23 de mesure, le système de mesure 13 évalue la position d'un point caractéristique réel Pr par rapport à l'appareil de mesure 13. En connaissant la position et l'orientation du système de mesure 13 dans le repère de robot R0 et en connaissant la position d'un point caractéristique réel Pr par rapport au système de mesure 13, on peut calculer la position du point caractéristique réel Pr dans le repère de robot R0.

Dans le modèle 3D nominal 3Dn de la pièce à traiter, les coordonnées de chaque point de la pièce sont exprimées dans le repère de référence R1, qui est un référentiel lié au modèle 3D nominal 3Dn.

Les coordonnées des points caractéristiques modèle Pm du modèle 3D nominal 3Dn de la pièce à traiter sont donc exprimées dans le repère de référence R1.

Le repère de référence R1 est implémenté dans le repère de robot R0, ce qui permet d'exprimer les coordonnées d'un point du repère de référence R1 dans le repère de robot R0. Autrement dit, une première matrice de passage M10 du repère de référence R1 au repère de robot R0 est connue.

En effet, le repère de robot R0 est configuré pour réaliser le contrôle commande du robot de peinture 3. Le robot de peinture 3 est programmé et son fonctionnement est modélisé et simulé dans un modèle de cellule de peinture. Pour programmer le fonctionnement du modèle de robot dans le modèle de la cellule de peinture, le modèle de robot est associé à un repère modèle Rm. Pour que le fonctionnement du modèle de robot puisse être reproduit par le robot de peinture 3 dans la cellule de peinture, il est nécessaire de pouvoir transposer toute coordonnée du repère modèle Rm dans le repère de robot R0. Une deuxième matrice de passage Mm0, du repère modèle Rm au repère de robot R0, est donc connue.

En pratique, une étape de calibration permet avantageusement d'associer les origines du repère modèle Rm et du repère R0 de manière à pouvoir utiliser le repère de robot R0 comme référentiel commun entre le modèle de la cellule de peinture et la cellule de peinture réelle.

La position du modèle 3D nominal 3Dn, et donc du repère de référence R1, dans le modèle de l'atelier est définie par conception et est donc bien connue. Une troisième matrice de passage M1m, du repère de référence R1 au repère modèle Rm, est donc connue.

Il est donc possible d'exprimer dans un repère commun les coordonnées des points caractéristiques modèle Pm et les coordonnées des points caractéristiques réels Pr, par exemple le repère de référence R1 ou le repère de robot R0.

Une sous-étape S32 de calcul d'un repère pièce R3, qui est comprise l'étape secondaire S30 de transposition, est ensuite réalisée, au cours de laquelle un repère pièce R3 est calculé à partir de couples de points caractéristiques. Un couple de points caractéristiques associe un point caractéristique modèle Pm et le point caractéristique réel Pr correspondant. Cette sous-étape peut être réalisée par différentes méthodes, par exemple en associant une méthode des barycentres et une méthode des moindres carrés, ou une méthode pseudo-inverse. Le repère pièce R3 ainsi calculé est configuré pour assigner à un point caractéristique réel Pr des coordonnées dans le repère pièce R3 sensiblement équivalentes aux coordonnées dans le repère de référence R1 du point caractéristique modèle Pm associé.

Autrement dit, le repère pièce R3 est calculé pour être l'équivalent pour la pièce 2 du repère de référence R1 pour le modèle 3D nominal 3Dn.

Le repère pièce R3 va ensuite être exprimé dans le repère de robot R0.

Cette étape permet d'identifier la matrice de transformation Mt du repère de référence R1 vers le repère pièce R3 dans le repère de robot R0. Les coefficients de la matrice de transformation Mt traduisent donc les rotations et les translations du repère pièce R3, et donc de la pièce 2, par rapport au repère de référence R1, et donc au modèle 3D nominal 3Dn.

Plus concrètement, cela permet d'identifier la position et l'orientation de la pièce 2 par rapport au robot de peinture 3.

Cela permet ensuite de déplacer les trajectoires de la tête d'impression 9 en fonction de la position et l'orientation de la pièce 2, pour que le chemin parcouru par la tête d'impression 9 par rapport à la pièce 2 soit identique à la trajectoire définie pour le modèle 3D réaliste 3Dr.

Dans un mode de réalisation appliqué à la peinture d'une pièce d'une carrosserie d'une automobile, les coordonnées des points des différentes parties du modèle 3D nominal 3Dn sont exprimées dans un référentiel lié au modèle 3D nominal 3Dn du véhicule, qui sert alors de repère de référence. La matrice de passage du repère de référence R1 au repère de robot R0 est connue, et permet d'exprimer les coordonnées des points du modèle 3D nominal 3Dn du véhicule dans le repère de robot R0.

Les coordonnées des points caractéristiques modèle Pm du véhicule, exprimées dans le repère de référence R1, sont ainsi exprimées dans le repère de robot R0.

Une étape de mesure permet d'identifier les coordonnées des points caractéristiques réels Pr dans le repère robot. Chaque point caractéristique réel Pr est ensuite associé à un point caractéristique modèle Pm correspondant pour former des couples de points caractéristiques. Une étape de calcul d'un repère réel est ensuite réalisée, ce qui permet ensuite de transposer les trajectoires de la tête d'impression définies dans le modèle 3D nominal 3Dn à la pièce 2.

Au cours de l'étape secondaire de génération de modèle réaliste S40, une sous-étape d'estimation d'écarts S41 est réalisée, au cours de laquelle sont comparés
- les coordonnées des points caractéristiques réels Pr exprimées dans le repère pièce R3 et
- les coordonnées des points caractéristiques modèle Pm exprimées dans le repère de référence R1.

En comparant un écart de position absolu, dans un même repère, entre un point caractéristique réel Pr et un point caractéristique modèle, l'écart de position obtenu peut avoir plusieurs origines : une déformation de la pièce 2 par rapport au modèle 3D nominal 3Dn, ou un positionnement ou une orientation de la pièce 2 par rapport au robot différent du positionnement ou de l'orientation du modèle 3D nominal 3Dn par rapport au robot.

En effectuant au préalable la sous-étape S32 de calcul d'un repère réel lié à la pièce 2, ici le repère pièce R3, et en exprimant les coordonnées des points caractéristiques réels Pr dans le repère pièce R3, cela permet de retirer les composantes orientation et déplacement de la pièce 2 des coordonnées des points caractéristiques réels Pr mesurées sur la pièce 2.

Les écarts de position qui subsistent entre un point caractéristique modèle Pm et le point caractéristique réel Pr correspondant sont donc considérés comme des déformations de la pièce 2.

Cette sous-étape d'estimation d'écarts S41 permet ainsi d'associer une pluralité de vecteurs de déplacement Vd entre chaque point caractéristique modèle Pm et le point caractéristique réel Pr correspondant, ce qui permet d'obtenir un champ de déplacement Cd.

Une sous-étape de simulation de contraintes 42 est ensuite réalisée en appliquant des déformations au modèle 3D de la pièce de manière à réduire au maximum les écarts de position entre les points caractéristiques du modèle 3D et ceux de la pièce 2. En d'autres termes, on simule des déformations du modèle 3D en lui appliquant des efforts de manière à reproduire le champ de déplacement Cd mesuré. Cela permet de générer un modèle 3D réaliste 3Dr, présentant une géométrie sensiblement identique à la pièce 2.

Le modèle 3D nominal 3Dn est ainsi modifié pour générer un modèle 3D réaliste 3Dr correspondant à la pièce 2 à peindre.

Une étape secondaire S50 d'assignation de nouvelles trajectoires pour la tête d'impression 9 est ensuite réalisée, afin d'adapter les trajectoires de la tête d'impression 9 aux déformations de la pièce 2.

Le modèle 3D nominal 3Dn comporte des informations de trajectoire de tête d'impression 9, ou trajectoire d'impression T0, ainsi que des informations d'activation associés à chaque point ou segment de cette trajectoire d'impression T0, les informations d'activation représentant l'activation de chacune des buses de la tête d'impression pour chaque point ou segment de la trajectoire d'impression T.

Au cours de l'étape secondaire S50, une nouvelle trajectoire, ou trajectoire assignée T1, et les informations d'activation de buses associées vont être sélectionnées pour correspondre au modèle 3D réaliste 3Dr. Plusieurs méthodes peuvent être utilisées pour sélectionner ces trajectoires.

Une sous-étape de génération S51 de trajectoire, qui est comprise dans l'étape secondaire S50, peut être réalisée afin de générer une trajectoire générée T2 adaptée au modèle 3D réaliste 3Dr.

La réalisation d'une telle sous-étape de génération T51 est notamment décrite en détail dans la demande de brevet FR-A-3111586 dont le contenu est incorporé par référence, et ne sera pas décrite en détails ici.

Dans cette demande FR-A-3111586, il est décrit la réalisation des étapes successives suivantes, réalisées par un calculateur et consistant à :
- a) définir, par un calcul automatique à partir du fichier informatique modélisant la surface à revêtir, une tranche de la surface à revêtir ;
- b) définir, par un calcul automatique et par itérations, une trajectoire en regard de la tranche de surface à revêtir, cette trajectoire étant formée d'une succession de points remarquables à atteindre par un point déterminé de la tête d'impression avec, en chaque point remarquable, une orientation de la tête d'impression à respecter ;
- c) retirer, par un calcul, la tranche à revêtir du fichier informatique modélisant la surface à revêtir ;
- d) recommencer à l'étape a) jusqu'à ce que la surface à revêtir modélisée soit d'aire nulle ;
- e) définir un programme d'activation des buses de la tête d'impression sur chaque trajectoire; et

Au cours de l'exécution de la sous-étape S51 de génération de trajectoire, la réalisation des étapes a) à e), en partant d'éléments simples repérés en périphérie d'une surface à revêtir, tels que des points, des segments ou des bords, de définir, à partir d'un modèle 3D de la surface à revêtir, permet de générer une trajectoire tridimensionnelle du robot uniquement en fonction de la surface à revêtir, en effectuant des allers-retours avec une tête d'impression. Cela permet également de générer automatiquement le programme d'activation des buses de la tête d'impression, afin d'appliquer le produit de revêtement, sur la surface à revêtir, là où il doit l'être et avec une orientation correcte de la tête d'impression.

La demande FR-A-3111586 décrit également que :
L'étape b) comprend des sous-étapes successives consistant à :
- bA) définir par itérations une portion de la tranche de surface à revêtir;
- bB) calculer un point d'impact sur la portion définie à la sous-étape bA) et un axe d'orientation de la tête d'impression au point d'impact ;
- bC) retirer, par le calcul, une fraction de la tranche de surface à revêtir;
- bD) recommencer à l'étape bA) jusqu'à ce que la tranche de surface à revêtir soit d'aire nulle ;
- bE) générer une partie de la trajectoire correspondant à un aller de la tête d'impression le long de la tranche à revêtir ; et
- bF) en fonction de la largeur d'un faisceau de produit de revêtement issu de la tête d'impression et d'une largeur de la tranche à revêtir, générer le cas échéant une partie de la trajectoire correspondant à un retour ou à un aller supplémentaire de la tête d'impression le long de la tranche à revêtir.

Lorsque la surface à revêtir comprend au moins une zone à ne pas revêtir, le procédé comprend une étape supplémentaire, mise en œuvre entre les étapes b) et c) et consistant à :
- g) adapter la trajectoire de tête d'impression en regard de la zone à ne pas revêtir, pour ne pas heurter l'objet.

L'étape a) comprend au moins des sous-étapes successives consistant à :
- a1) définir un premier repère orthogonal ayant
   - pour origine un point sélectionné par un utilisateur dans une surface de support imaginaire située à proximité de la surface à revêtir dans une représentation de l'espace utilisant le fichier informatique, , ou bien dans la surface à revêtir elle-même
   - pour axe des hauteurs une normale à la surface de support ou à la surface au point d'origine,
   - pour axe des ordonnées le produit vectoriel de l'axe des hauteurs et un axe aligné sur une direction d'avance sélectionnée par l'utilisateur, et
   - pour axe des abscisses le produit vectoriel de l'axe des ordonnées et de l'axe des hauteurs
- a2) définir une première normale et initier sa valeur comme égale à un vecteur dont la direction est l'axe des hauteurs du premier repère orthogonal défini en dernier lieu ;
- a3) définir, dans le premier repère orthogonal, un premier point comme un point de la surface à revêtir dont l'ordonnée est la plus grande dans le premier repère orthogonal, parmi les points de la surface à revêtir ;
- a4) définir, dans le premier repère orthogonal, un deuxième point comme un point de la surface à revêtir situé, par rapport au premier point, à une première distance mesurée selon l'axe des ordonnées et dans un sens négatif selon cet axe, cette première distance étant fixée en fonction de la répartition des buses sur la tête d'impression ;
- a5) calculer une normale moyenne à une tranche temporaire de la surface à revêtir définie entre un premier plan et un deuxième plan perpendiculaires à l'axe des ordonnées du premier repère orthogonal et passant respectivement par les premier et deuxième points
- a6) comparer la première normale et la normale moyenne ;
- a7) si la première normale et la normale moyenne sont identifiées comme différentes à l'étape a6),
   - a71) redéfinir la première normale comme égale à la normale moyenne ;
   - a72) redéfinir le premier repère orthogonal en prenant en compte cette nouvelle première normale ;
   - a73) mettre en œuvre à nouveau les sous-étapes a3) à a6) ;
- a8) si la première normale et la normale moyenne sont identifiées comme égales à l'étape a6), définir la tranche à revêtir comme égale à la tranche temporaire de l'étape a5).

L'étape b) comprend au moins des sous-étapes successives consistant à :
- b1) définir un deuxième repère orthogonal ayant pour origine le premier point, et pour axes des abscisses, des ordonnées et des hauteurs des axes confondus avec les axes du premier repère orthogonal défini en dernier lieu, à l'étape a1) ou à l'étape a72) ;
- b2) définir un nouvel axe des abscisses comme l'axe des abscisses du deuxième repère orthogonal ;
- b3) définir, dans le deuxième repère orthogonal, un point initial comme un point de la tranche de surface à revêtir dont l'abscisse est la plus petite parmi les points de la tranche ;
- b4) définir, dans le deuxième repère orthogonal, un point de coupure comme un point de la tranche de surface à revêtir situé, par rapport au point initial et le long du nouvel axe des abscisses, à une distance donnée ;
- b5) calculer une normale moyenne à une portion temporaire de la tranche de la surface à revêtir définie entre un troisième plan et un quatrième plan perpendiculaire au nouvel axe des abscisses et passant respectivement par le point initial et par le point de coupure
- b6) calculer un axe longitudinal temporaire égal au produit vectoriel normalisé de la normale moyenne calculée à l'étape b5) et de l'opposé de l'axe des ordonnées du deuxième repère orthogonal ;
- b7) comparer le nouvel axe des abscisses et l'axe longitudinal temporaire ;
- b8) si le nouvel axe des abscisses et l'axe longitudinal temporaire sont identifiés comme différents à l'étape b7),
   - b81) redéfinir le nouvel axe des abscisses comme égal à l'axe longitudinal temporaire ;
   - b82) mettre en œuvre à nouveau les sous-étapes b3) à b7)
- b9) si le nouvel axe des abscisses et l'axe longitudinal temporaire sont identifiés comme égaux à l'étape b7), définir une portion de tranche à revêtir comme égale à la portion temporaire de l'étape b5).

L'étape b) comprend au moins des sous-étapes successives suivant les sous-étapes b1) à b9) et consistant à :
- b10) calculer un vecteur d'orientation de la tête d'impression égal au produit vectoriel du nouvel axe des abscisses et de l'opposé de l'axe des ordonnées du deuxième repère orthogonal ;
- b11) définir un point de centre comme un point situé
   - à mi-distance entre les projections orthogonales du point initial et du point de coupure sur une droite passant par le point initial et de vecteur directeur égal au nouvel axe et
   - à une troisième distance du point initial mesurée selon l'axe des ordonnées du deuxième repère orthogonal et dans un sens négatif selon cet axe, cette troisième distance étant égale à la moitié de la première distance ;
- b12) définir un point d'impact comme la projection du point de centre sur la portion de tranche de surface à revêtir selon une droite dont le vecteur directeur est le vecteur d'orientation de la tête d'impression ;
- b13) si le point d'impact existe, ajouter le point d'impact et le vecteur d'orientation de la tête d'impression dans la trajectoire.

Les buses de la tête d'impression sont disposées en rangées parallèles entre elles, alors que l'abscisse, le long du nouvel axe des abscisses du deuxième repère orthogonal, du point de centre est égale à la demi-somme des abscisses des projections orthogonales du point initial et du point de coupure sur une droite passant par le point initial et de vecteur directeur égal au nouvel axe et alors que le point de centre est décalé, par rapport à cette droite et dans le sens opposé celui de l'axe des ordonnées du deuxième repère orthogonal, d'une distance mesurée selon l'axe des ordonnées et égale à la moitié du produit du nombre de rangées de buses et de la distance entre deux de ces rangées.

Si le point d'impact de l'étape b12) n'existe pas, du fait de l'absence de matière de la tranche de surface à revêtir le long d'une droite dont le vecteur directeur est le vecteur d'orientation de la tête d'impression et qui passe par le point de centre, des sous-étapes supplémentaires sont mises en œuvre entre les sous-étapes b12) et b13), qui consistent à :
- b14) rechercher un point extrême de la portion de tranche à revêtir dont la position le long d'un axe parallèle au vecteur d'orientation de la tête d'impression est la plus éloignée dans un sens opposé à ce vecteur ;
- b15) projeter le point extrême sur un axe passant par le point de centre et parallèle au vecteur d'orientation de la tête d'impression pour définir un point d'impact alternatif ;
- b16) assimiler le point d'impact au point d'impact alternatif pour la portion de tranche à revêtir en cours de traitement.

L'étape b) comprend au moins des sous-étapes successives suivant les sous-étapes b1) à b13) et consistant à :
- b18) réduire la tranche de surface à revêtir d'une fraction de celle-ci, notamment de la portion définie à l'étape b9) ;
- b19) déterminer si la tranche de surface à revêtir a une aire non nulle ;
- b20) si le résultat de la détermination de l'étape b19) est positif, mettre à nouveau en œuvre les sous-étapes b3) à b19).

L'étape b) comprend au moins des sous-étapes successives suivant les sous-étapes b1) à b13) et consistant à :
- b21) définir un vecteur d'axe de la tête d'impression en chaque point d'impact comme égal au produit vectoriel normalisé du vecteur d'orientation de la tête d'impression en ce point et de l'axe des ordonnées du deuxième repère orthogonal ;
- b23) définir un point remarquable à atteindre à partir du point d'impact, de la répartition de la ou des buses sur la tête d'impression, du vecteur d'axe de la tête et de l'axe des ordonnées du deuxième repère orthogonal ;
- b24) inclure le point remarquable et le vecteur d'orientation de la tête d'impression au point d'impact correspondant dans la trajectoire.

L'étape b) comprend une sous-étape supplémentaire d'ajout à la trajectoire définie pour chaque tranche de la surface à revêtir d'au moins un point d'entrée et/ou d'au moins un point de sortie, supplémentaire par rapport à ceux calculés à l'étape b24) et/ou l'étape b) comprend une sous-étape supplémentaire d'optimisation du nombre de points remarquables de la trajectoire au cours de laquelle au moins un point remarquable est supprimé, à savoir un point remarquable colinéaire avec un point qui le précède et avec un point qui le suit le long de la trajectoire et dont l'axe d'orientation est parallèle à l'axe d'orientation du point qui le précède et avec l'axe d'orientation du point qui le suit le long de la trajectoire.

L'étape b) comprend une sous-étape de détermination, en fonction de la largeur d'un faisceau de produit de revêtement issu de la tête d'impression et d'une largeur de la tranche de surface à revêtir, du nombre d'aller-retour de la tête d'impression à effectuer pour revêtir la tranche à revêtir et, le cas échéant, un ou des tronçons de la trajectoire, suivant le premier aller, sont calculés en inversant l'ordre des points remarquables définis à l'étape b22) pour le tronçon de trajectoire précédent.

Les sous-étapes a71) à a73) ou les sous-étapes b81) et b82) sont mises en œuvre jusqu'à ce qu'un nombre limite d'itérations soit atteint.

A partir de la trajectoire définie à l'étape b), le calculateur calcule, pour chaque buse de la tête d'impression, une distance à revêtir ou une distance à ne pas revêtir sur une succession de pas d'avance de la tête d'impression.

L'étape e) comprend des sous étapes consistant à :
- e1) discrétiser le déplacement de la tête d'impression, entre des points remarquables d'une trajectoire, au moyen de positions discrétisées;
- e2) déterminer l'existence d'un point d'impact pour chaque buse en chaque position discrétisée à la sous-étape e1) ;
- e3) calculer une distance à revêtir ou une distance à ne pas revêtir en chaque position discrétisée de la trajectoire et, éventuellement, des coefficients multiplicateurs, en fonction de la distance entre une buse et une buse de référence; et
- e4) construire un fichier de programmation pour l'activation des buses le long des trajectoires.

Ces éléments sont décrits en détail dans la demande FR-A-3111586 et nous renvoyons à son contenu, qui est inclus par référence dans la présente demande.

Avantageusement, chaque trajectoire générée T2 au cours de la sous-étape S51 de génération de trajectoire est ensuite enregistrée dans une base de données, associée avec le modèle 3D réaliste 3Dr correspondant, au cours d'une sous-étape d'enregistrement S52.

Avantageusement, l'étape secondaire S50 d'assignation comporte en outre une sous-étape S53 de comparaison aux modèles 3D enregistrés dans la base de données recensant les modèles 3D réalistes 3Dr et leur trajectoire générée T2 d'impression associée, la sous-étape S53 de comparaison étant réalisée après l'étape secondaire S40 de génération de modèle, et avantageusement avant la sous-étape S51 de génération de trajectoire.

Au cours de la sous-étape S53 de comparaison, le modèle 3D réaliste 3Dr obtenu par l'exécution de l'étape secondaire S40 de génération de modèle est comparé avec les modèles 3D réalistes 3Dr enregistrés dans la base de données.

Si le modèle 3D réaliste 3Dr obtenu suite à l'exécution de l'étape S40 de génération de modèle correspond sensiblement à une entrée dans la base de données, les trajectoires générées T2 associées à cette entrée sont appliquées au modèle 3D réaliste 3Dr lors de l'exécution de l'étape de peinture de la pièce. Cela permet de limiter le calcul nécessaire à la mise en œuvre du procédé, en évitant d'exécuter la sous-étape S51 de génération de trajectoire si elle n'est pas nécessaire, ce qui permet d'économiser du temps et de l'énergie.

On compare les coordonnées des points caractéristiques du modèle 3D réaliste 3Dr obtenu suite à l'exécution de l'étape de génération S40 de modèle, et les coordonnées des points caractéristiques du modèle 3D de la base de données, pour obtenir un champ d'erreurs Ce. Il est bien entendu que les coordonnées de ces points sont exprimées respectivement dans le repère pièce R3 lié au modèle 3D réaliste 3Dr d'une part et au modèle 3D de la base de données d'autre part, de manière à ne comparer que les écarts géométriques liés à des déformations.

La correspondance entre le modèle 3D réaliste 3Dr et le modèle 3D issu de la base de donnée est observée si chacune des erreurs est inférieure à un premier seuil établi par l'utilisateur en fonction des contraintes d'application, et si la somme des carrés de toutes les erreurs est inférieure à un deuxième seuil défini par l'utilisateur. Le premier seuil et le deuxième seuil sont déterminés par l'utilisateur en fonction des contraintes de qualité et de performances qu'il souhaite respecter. Le premier seuil peut par exemple présenter un ordre de grandeur d'un dixième de millimètre, et le deuxième seuil peut par exemple être de l'ordre de grandeur du millimètre.

Si le modèle 3D réaliste 3Dr obtenu suite à l'exécution de l'étape S4 ne correspond pas à une entrée dans la base de données, on exécute une sous-étape S51 de génération de trajectoire de manière à calculer une nouvelle trajectoire d'impression correspondant au modèle 3D réaliste 3Dr.

Cette sous-étape S51 de génération de trajectoire peut être réalisée soit « en ligne », c'est-à-dire que la ligne de production est arrêtée pendant l'exécution de la sous-étape S51 de génération de trajectoire, soit « hors ligne », c'est-à-dire que l'on sort la pièce de la ligne de production, ce qui permet de commencer un nouveau procédé pour la pièce suivante et de maximiser le flux de la ligne de production. Une fois la pièce sortie de la ligne de production, une sous-étape S51 de génération de trajectoire est réalisée, et les trajectoires calculées pour cette surface dans la base de données sont enregistrées au cours d'une sous-étape S52 d'enregistrement dans la base de données, avec le modèle 3D réaliste 3Dr associé, créant une nouvelle entrée dans la base de données.

Optionnellement, une sous-étape S54 de certification est réalisée avant l'exécution de la sous-étape S52 d'enregistrement, au cours de laquelle la trajectoire générée T2 calculée au cours de sous-étape S51 de génération de trajectoire est contrôlée afin de vérifier que cette trajectoire générée T2 ne comporte pas de collision entre le robot de peinture 3 et la pièce 2. La sous-étape S54 de certification peut être assurée par un opérateur en observant la mise en œuvre de l'étape de peinture utilisant la trajectoire générée T2, ou bien par simulation numérique de la phase de peinture.

Cela permet de n'enregistrer que des trajectoires certifiées conformes dans la base de données, ce qui limite le risque de dégradation de pièce lors de la production.

Il est également avantageux, au cours de la sous-étape S51 de génération de trajectoire, d'imposer des points de passage au robot pour éviter toute collision avec la pièce, ou encore de générer un espace de tolérance dans lequel doit se situer chaque point de la trajectoire. L'espace de tolérance peut par exemple être obtenu en positionnant deux surfaces correspondant au modèle 3D nominal 3Dn de la pièce situées à une distance donnée l'une de l'autre, ou encore appliquer une contrainte d'orientation et de position à chaque point de trajectoire, par exemple chaque point de trajectoire générée doit présenter une orientation comprise dans un cône d'ouverture de 45°, de préférence un cône d'ouverture de 20° par rapport à une normale à la pièce en ce point de trajectoire générée.

Cela permet d'imposer des contraintes lors de la génération d'une nouvelle trajectoire qui permet d'éviter les risques de collision entre le robot et la pièce.

Avantageusement, une étape secondaire de contrôle qualité S60 peut être réalisée au moyen des différents éléments calculés au cours du procédé de génération de modèle.

Différents seuils de détection peuvent par exemple être appliqués sur deux éléments : la matrice de transformation Mt de repère déterminée au cours de la sous-étape S32 de calcul d'un repère pièce et le champ de déplacement Cd déterminé au cours de la sous-étape d'estimation d'écarts S41.

De manière comparable à la sous-étape S53 de comparaison, le champ de déplacement Cd mesuré est comparé avec des seuils de détection d'erreur, configurés de telle sorte que si l'un des vecteurs du champ dépasse un seuil de détection d'erreur la pièce est considérée comme non conforme, et également la somme des déplacements est comparée à un deuxième seuil de détection de manière à déclarer la pièce non conforme si la somme des déplacements excède ce seuil.

Les composantes de la matrice de transformation Mt sont comparées à des seuils de détection d'erreur: les composantes de translation doivent être chacune inférieure à un premier seuil, la somme des composantes de translation doit être inférieure à un deuxième seuil, les composantes de rotation doivent toutes être inférieures à un troisième seuil, la somme des composantes de rotation doit être inférieure à un quatrième seuil.

Il est nécessaire de comparer d'abord les composantes de rotation de la matrice de transformation de repère ; si le seuil de détection de défaut de la somme des composantes de rotations n'est pas atteint, on procède à la comparaison des seuils de détection de défaut sur les composantes de rotation ; si l'un des seuils est atteint, la pièce est déclarée mal positionnée ; cela permet d'identifier un fonctionnement non conforme de la ligne de production.

La position théorique de la pièce par rapport à l'origine du repère robot est connue, donc la translation théorique associée à une rotation selon les composantes de rotation de la matrice de transformation de repère peut être calculée.

Les composantes de translation sont ensuite comparées à la translation théorique associée à la rotation. Cela permet d'obtenir des erreurs de positionnement. Les erreurs de positionnement sont comparées à des seuils de détection d'erreur. Si un seuil est atteint, la pièce est déclarée mal positionnée. Cela permet également de détecter un défaut dans le fonctionnement de la chaîne de production.

L'étape primaire S1 de modélisation de la pièce, permet donc, en plus de modéliser la zone à peindre de la pièce 2 et la trajectoire à effectuer, de réaliser un contrôle qualité de la pièce, en comparant la déformation à certains points critiques avec des seuils de tolérance. Cela permet de détecter si la qualité d'une ligne de production se dégrade et d'intervenir sur celle-ci.

Cela permet également de détecter la déformation caractéristique d'une ligne de production et d'appliquer directement une trajectoire de peinture précédemment enregistrée correspondant à cette déformation caractéristique, ce qui permet d'économiser de la puissance de calcul en limitant le calcul de trajectoire de peinture.

## Revendications

1. Procédé (1) de peinture d'une pièce (2) au moyen d'un robot de peinture (3) comprenant un bras robotisé (4) équipé d'un dispositif de projection de peinture (5), le procédé (1) comprenant, une étape primaire S1 de modélisation d'un modèle 3D réaliste (3Dr) comprenant des informations de trajectoire de peinture, et une étape primaire de projection de peinture S2 pendant laquelle le dispositif de projection de peinture (5) est déplacé le long de la trajectoire de peinture en regard de la pièce (2), l'étape primaire S1 comprenant des étapes secondaires de :
- S10 : Détermination des coordonnées de référence (Cr) d'au moins trois points caractéristiques modèle (Pm) sur un modèle 3D nominal (3Dn) de la pièce à peindre, les coordonnées des points caractéristiques modèle (Pm) étant exprimées dans un repère de référence (R1) ;
- S20 : Détection d'au moins trois points caractéristiques réels (Pr) sur la pièce (2), les points caractéristiques réels (Pr) correspondant respectivement sur la pièce (2) à un des points caractéristiques modèle (Pm) déterminés sur le modèle 3D nominal (3Dn) au cours de l'étape S10
- S30 : Transposition des coordonnées des points caractéristiques réels (Pr) et des coordonnées des points caractéristiques modèle (Pm) dans un repère commun, par exemple le repère de référence (R1) ;
**caractérisé en ce que** l'étape primaire S1 de modélisation comprend en outre une étape secondaire de :
- S40 : Génération d'un modèle 3D réaliste (3Dr) correspondant à la pièce (2) telle que déformée et positionnée dans une cellule de peinture, en appliquant au modèle 3D nominal (3Dn) des simulations de contraintes entraînant des déformations de manière à déplacer les points caractéristiques modèle (Pm) vers les coordonnées respectives de leur point caractéristique réel (Pr) correspondant, de sorte à faire correspondre la position des points caractéristiques modèle (Pm) par rapport au modèle 3D nominal (3Dn) avec la position des points caractéristiques réels (Pr) par rapport au modèle 3D réaliste (3Dr).

2. Procédé selon la revendication 1, dans lequel l'étape secondaire S20 de détection de points caractéristiques réels (Pr) sur la pièce (2) comprend :
- une sous-étape S21 d'acquisition d'une image de la pièce (2), et
- une sous-étape S22 d'analyse d'image pour détecter les points caractéristiques réels (Pr) de la pièce, les points caractéristiques réels (Pr) relevés étant les mêmes éléments visuels distinctifs de la pièce (2) que les éléments visuels distinctifs du modèle 3D nominal (3Dn) qui sont considérés comme les points caractéristiques modèle (Pm), et
- une sous-étape S23 de mesure des coordonnées des points caractéristiques réels (Pr).

3. Procédé selon la revendication 2, dans lequel la sous-étape S22 d'analyse d'image est avantageusement mise en œuvre au moyen d'un algorithme entraîné par procédé d'intelligence artificielle.

4. Procédé selon l'une des revendications 2 à 3, dans lequel au cours de la sous-étape S23 les points caractéristiques réels (Pr) sont associés à des coordonnées dans repère de système de mesure (R2), et dans lequel l'étape secondaire d'identification S30 comprend :
- une sous-étape de transposition S31 au cours de laquelle les coordonnées des points caractéristiques réels (Pr) exprimées dans le repère de système de mesure (R2) et les coordonnées des points caractéristiques modèle (Pm) du modèle 3D nominal (3Dn) exprimées dans le repère de référence (R1) vont être exprimées dans un même repère commun, et
- une sous-étape S32 de calcul d'un repère pièce (R3) configuré pour assigner à un point caractéristique réel (Pr) des coordonnées dans le repère pièce (R3) sensiblement équivalentes aux coordonnées dans le repère de référence (R1) du point caractéristique modèle (Pm) associé, cette sous-étape S32 de calcul permettant d'identifier la matrice de transformation (Mt) du repère de référence (R1) vers le repère pièce (R3).

5. Procédé selon la revendication 4, dans lequel l'étape secondaire S40 de génération d'un modèle 3D réaliste (3Dr) comprend :
- une sous-étape d'estimation d'écarts S41, au cours de laquelle sont comparés :
∘ les coordonnées des points caractéristiques réels (Pr) exprimées dans le repère pièce (R2) et
∘ les coordonnées des points caractéristiques modèle (Pm) exprimées dans le repère de référence (R1),
de manière à associer une pluralité de vecteurs de déplacement (Vd) entre chaque point caractéristique modèle (Pm) et le point caractéristique réel (Pr) correspondant, ce qui permet d'obtenir un champ de déplacement (Cd), et
- une sous-étape de simulation de contraintes S42, réalisée suite à la sous-étape d'estimation d'écarts S41, en appliquant des déformations au modèle 3D de la pièce de manière à réduire au maximum les écarts de position entre les points caractéristiques du modèle 3D et ceux de la pièce (2), de manière à générer le modèle 3D réaliste (3Dr) correspondant à la pièce (2) telle que déformée.

6. Procédé selon l'une des revendications 1 à 5, dans lequel l'étape primaire S1 de modélisation comprend en outre une étape secondaire S50 d'assignation d'une trajectoire assignée (T1) pour la tête d'impression (9), la trajectoire assignée (T1) étant sélectionnée pour correspondre au modèle 3D réaliste (3Dr) afin d'adapter les trajectoires de la tête d'impression (9) aux déformations de la pièce (2).

7. Procédé selon la revendication 6, dans lequel l'étape secondaire S50 d'assignation comprend une sous-étape de génération S51 de trajectoire configurée pour générer une trajectoire générée (T2) adaptée au modèle 3D réaliste (3Dr).

8. Procédé selon la revendication 7, dans lequel l'étape secondaire S50 d'assignation comprend en outre une sous-étape d'enregistrement S52 au cours de laquelle chaque trajectoire générée (T2) au cours de la sous-étape S51 de génération de trajectoire est ensuite enregistrée dans une base de données, associée avec le modèle 3D réaliste (3Dr), et une sous-étape S53 de comparaison réalisée après l'étape de génération de modèle S40, configurée pour comparer le modèle 3D réaliste (3Dr) obtenu par l'exécution de l'étape S40 de génération de modèle avec les modèles 3D réalistes (3Dr) enregistrés dans la base de données, de sorte que si le modèle 3D réaliste (3Dr) obtenu suite à l'exécution de l'étape S40 de génération de modèle correspond sensiblement à une entrée dans la base de données, les trajectoires générées (T2) associées à cette entrée sont appliquées au modèle 3D réaliste (3Dr) lors de l'exécution de l'étape de peinture S2 de la pièce.

9. Procédé selon la revendication 8 dans lequel la sous-étape S53 de comparaison est réalisée avant la sous-étape S51 de génération de trajectoire.

10. Procédé selon l'une des revendications 8 à 9, dans lequel l'étape secondaire S50 d'assignation comprend en outre une sous-étape S54 de certification réalisée avant l'exécution de la sous-étape S52 d'enregistrement, au cours de laquelle la trajectoire générée (T2) calculée au cours de la sous-étape S51 de génération de trajectoire est contrôlée afin de vérifier que cette trajectoire générée (T2) ne comporte pas de collision entre le robot de peinture (3) et la pièce (2).

11. Procédé selon l'une des revendications 4 et 5 à 10, dans lequel l'étape primaire S1 de modélisation comprend en outre une étape de contrôle qualité S60 configurée pour détecter un défaut sur une pièce ou une ligne de production, au cours de laquelle le champ de déplacement (Cd) mesuré au cours de la sous-étape S41, est comparé avec des seuils de détection d'erreur, de manière à détecter un défaut sur la pièce (2), et/ou les composantes de la matrice de transformation (Mt) obtenue grâce à la sous-étape S32 sont comparées à des seuils de détection d'erreur, de manière à détecter un défaut de positionnement de la pièce (2) et donc un défaut sur la ligne de production.

12. Unité de calcul (6) comportant une mémoire (7) et un processeur (8), la mémoire (7) comprenant un programme configuré pour mettre en œuvre un procédé (1) de peinture selon l'une des revendications 1 à 11 lorsqu'il est exécuté par le processeur (8).

13. Produit programme d'ordinateur comportant des données de code configurées pour, lorsqu'elles sont exécutées par un processeur ou une unité de calcul, permettre la mise en œuvre d'un procédé selon l'une des revendications 1 à 11.

14. Robot de peinture (3) comprenant un bras robotisé (4) équipé d'un dispositif de projection de peinture (5) comprenant une tête d'impression (9), un système d'acquisition (10) comprenant un appareil optique (11) et un système de mesure (13), le robot de peinture (3) étant configuré pour être commandé au moyen d'une poste de contrôle comprenant une unité de calcul (6) selon la revendication 12, de manière à mettre en œuvre un procédé selon l'une des revendications 1 à 11.
